# EUROPÄISCHE PATENTSCHRIFT

(11) **EP 2 708 341 B1**
(45) Veröffentlichungstag und Bekanntmachung des Hinweises auf die Patenterteilung: **29.04.2015**
(21) Anmeldenummer: 13184272.6
(22) Anmeldetag: 13.09.2013
(51) Int. Cl.: B28D 1/22, B23D 47/02, B23D 57/00, B28D 1/00, B28D 1/04, B28D 1/18, B28D 1/24

(54) **Fliesenschneider**
Tile cutter
Dispositif de découpe de carreaux

(30) Priorität: 14.09.2012 DE 202012103508 U
(43) Veröffentlichungstag der Anmeldung: 19.03.2014
(73) Patentinhaber: Englhard, Hermann, 83370 Seeon/Chiemsee (DE)
(72) Erfinder: Englhard, Hermann, 83370 Seeon/Chiemsee (DE)
(74) Vertreter: Tetzner, Michael

(56) Entgegenhaltungen:
- DE-A1-102011 050 520
- DE-T2- 69 322 848
- DE-U- 1 694 626

## Beschreibung

Die Erfindung betrifft einen Fliesenschneider mit einer Auflagefläche, einer Führungsschiene, einem an der Führungsschiene geführten Laufwagen und einem am Laufwagen gehalterten Schneidelement zum Schneiden oder Ritzen einer Fliese oder Platte.

Die heute auf dem Markt erhältlichen Fliesen bzw. Platten haben immer größere Abmessungen von teilweise weit über einem Meter. Dadurch werden entsprechend größere Anforderungen an die Fliesenschneider gestellt. Um die Geradlinigkeit der Schneid- bzw. Ritzlinie zu gewährleisten, müssen die Führungsschiene und die Führung des Laufwagens ausreichend stabil und exakt ausgeführt werden.

Aus der DE 693 22 848 T2 ist eine Fliesenschneidmaschine bekannt, bei der auf einer brückenförmigen, in der Höhe nicht verstellbaren Führung ein verschiebbarer Werkzeugträger angeordnet ist. Das Schneid- bzw. Ritzelement befindet sich direkt unterhalb der Führung. Dies hat jedoch den Nachteil, dass die Schnittlinie von oben nicht einsehbar ist. Eine ähnliche Ausführung ist aus der EP 1 066 193 B1 bekannt, bei der die Führungsschiene zwei geteilt ist und der Laufwagen zwischen den beiden Teilen der Führungsschiene hindurchreicht. Auch hier wird die Schnittführung durch die Führungsschiene verdeckt.

Aus der DE 1 694 626 U1 ist ein Fliesenschneider bekannt, bei dem ein Schlitten auf einem Lineal verschiebbar ist. Am Schlitten ist seitlich ein Schneidelement angeordnet. Bei diesem Fliesenschneider ist das Schneidelement in der Draufsicht gut sichtbar, sodass die Fliese bzw. das Lineal bequem und einfach ausgerichtet werden kann. Dieser Fliesenschneider ist jedoch nur zum Schneiden von vergleichweise kleinen Fliesen geeignet.

Durch die DE 10 2011 050 520 A1 ist ein Fliesenschneider bekannt, der im Wesentlichen aus folgenden Bauteilen besteht:
a. einer Auflagefläche für eine zu schneidende Fliese,
b. einer Führungsschiene,
c. einem an der Führungsschiene geführten Laufwagen und
d. einem am Laufwagen gehalterten Schneidelement zum Schneiden und/oder Ritzen von Fliesen, wobei das Schneidelement in der Draufsicht des Fliesenschneiders seitlich von der Führungsschiene angeordnet ist.

Der Fliesenschneider ist weiterhin dadurch gekennzeichnet, dass die Führungsschiene - in der Draufsicht des Fliesenschneiders - eine obere und eine untere Führungsbahn und der Laufwagen obere und untere Führungsrollen aufweist, wobei die Führungsrollen mit den Führungsbahnen in Abrolleingriff stehen und die Führungsrollen und die zugehörige Führungsbahn derart ineinander greifen, dass die Führungsrollen auf der zugehörigen Führungsbahn zwangsgeführt sind. Durch die seitliche Anordnung des Schneidelementes ist eine bequeme Ausrichtung der zu schneidenden Fliese möglich. Durch den über Rollen geführten Laufwagen kann zudem auf einfache Art und Weise ein sehr exakter Schnitt ausgeführt werden.

Der Erfindung liegt nun die Aufgabe zugrunde, die Einsatzmöglichkeiten des aus der DE 10 2011 050 520 A1 bekannten Fliesenschneiders weiter zu verbessern und dennoch eine einfache Handhabung und auch das Schneiden von großen Fliesen/Platten zu ermöglichen.

Diese Aufgabe wird durch die Merkmale des Anspruches 1 gelöst.

Der erfindungsgemäße Fliesenschneider besteht im Wesentlichen aus
- einer Auflagefläche für zu schneidende Fliesen,
- einer Führungsschiene,
- einem an der Führungsschiene geführten Laufwagen,
- einer am Laufwagen angebrachten Befestigungsplatte,
- einem an der Befestigungsplatte gehalterten Motor mit Abtriebswelle
- einem Ritzwerkzeug,
- einer Trennscheibe,
- wobei wahlweise das Ritzwerkzeug mit der Befestigungsplatte oder die Trennscheibe mit der Abtriebswelle derart koppelbar sind, dass
- Ritzwerkzeug und Trennscheibe die gleiche Ritz- bzw. Schneidlinie haben und
- das Ritzwerkzeug und die Trennscheibe in der Draufsicht des Fliesenschneiders seitlich von der Führungsschiene angeordnet sind.

Durch die wahlweise Anbringung von Ritzwerkzeug und Trennscheibe werden die Einsatzmöglichkeiten des Fliesenschneiders deutlich erhöht. Durch die speziell ausgerichtete Befestigungsplatte wird sichergestellt, dass beide Werkzeuge die gleiche Ritz- bzw. Schneidlinie haben und dadurch eine erneute Justage der Vorrichtung nicht erforderlich ist.

Weitere Ausgestaltungen der Erfindung sind Gegenstand der Unteransprüche.

Neben dem Ritzwerkzeug und der Trennscheibe können natürlich noch andere Werkzeuge, insbesondere ein Fräswerkzeug mit der Befestigungsplatte gekoppelt werden

Die Befestigungsplatte ist vorzugsweise in einem bestimmten Schwenkbereich um eine Schwenkachse am Laufwagen gelagert, wobei die Schwenkachse vorzugsweise parallel zur Auflagefläche und senkrecht zur Führungsschiene ausgerichtet ist. Der Schwenkbereich kann dabei durch zwei Anschläge definiert werden, wobei ein Federelement die Befestigungsplatte an einem dieser Anschläge drückt. Gemäß einer weiteren Ausgestaltung weist die Befestigungsplatte eine bogenförmige Nut um seine Schwenkachse auf, wobei die beiden Nutenden die Anschläge für den Schwenkbereich darstellen. Über ein Feststellelement kann die Befestigungsplatte in eine beliebigen Schwenkstellung arretiert werden. Durch die Schwenkbarkeit kann das Schneidwerkzeug an die Stärke der zu schneidenden Fliese angepasst werden. Bei der Verwendung von Trennscheiben bzw. einem Fräswerkzeug kann man mit Hilfe des Schwenkmechanismus zudem von oben in das Material "eintauchen". Gemäß einer weiteren Ausgestaltung der Erfindung ist eine um eine Schwenkachse schwenkbewegliche Brechstange vorgesehen, die mit einem auf der Auflagefläche angeordneten Brechkegel zusammenwirkt. Die Schwenkachse der Brechstange ist dabei parallel zur Auflagefläche ausgerichtet. Außerdem weist sie in der Nähe seiner Schwenkachse zwei Brechbacken auf, die derart angeordnet sind, dass der Brechkegel - in der Draufsicht des Fliesenschneiders - zwischen den beiden Brechbacken liegt. Die eingeritzte Fliese kann mit Hilfe der Brechstange auf einfache Art und Weise exakt gebrochen werden.

In einer weiteren Ausgestaltung wird die Brechstange mit wenigstens einem, vorzugsweise zwei Federelementen, nach oben in einer Ruhestellung gehalten. Von wo sie gegen die Kraft des wenigstens einen Federelementes in Richtung der Auflagefläche in ihrer Brechstellung gedrückt werden.

Für eine exakte Schnittführung ist das Zusammenwirken von Führungsschiene und Laufwagen von entscheidender Bedeutung. Gemäß einer bevorzugten Ausführung weist die Führungsschiene eine erste und eine zweite Führungsbahn und der Laufwagen mehrere Führungsrollen auf, wobei die Führungsrollen mit den Führungsbahnen in Abrolleingriff stehen und die Führungsrollen und die zugehörige Führungsbahn derart ineinander greifen, dass die Führungsrollen auf der zugehörigen Führungsbahn zwangsgeführt sind. Dabei können die Führungsrollen die zugehörige Führungsbahn auch teilweise umgreifen.

Weitere Vorteile und Ausgestaltungen der Erfindung werden im Folgenden anhand der Beschreibung und der Zeichnung näher erläutert.

In der Zeichnung zeigen
- Fig. 1: eine dreidimensionale Darstellung des Fliesenschneiders,
- Fig. 2: eine vergrößerte dreidimensionale Darstellung des Laufwagens mit Befestigungsplatte,
- Fig. 3: eine dreidimensionale Darstellung gemäß Fig. 2 mit angebrachtem Ritzwerkzeug,
- Fig. 4: eine dreidimensionale Darstellung gemäß Fig. 2 mit angebrachter Trennscheibe,
- Fig. 5: Schnittdarstellung der Führungsschiene mit Laufwagen gemäß einem ersten Ausführungsbeispiel,
- Fig. 6: Schnittdarstellung der Führungsschiene mit Laufwagen gemäß einem zweiten Ausführungsbeispiel,
- Fig. 7: Schnittdarstellung der Führungsschiene mit Laufwagen gemäß einem dritten Ausführungsbeispiel,
- Fig. 8: Detailansicht der Brechstange mit Federelementen und
- Fig. 9: Schnittdarstellung der Führungsschiene im Bereich ihrer Befestigung.

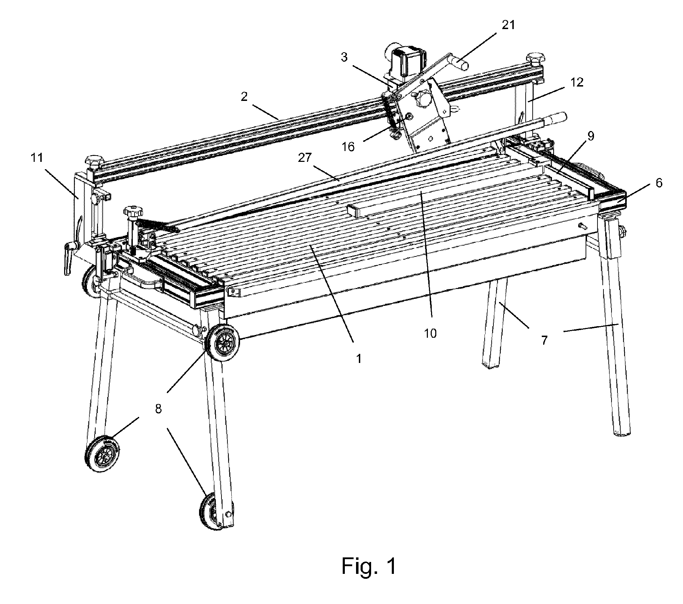

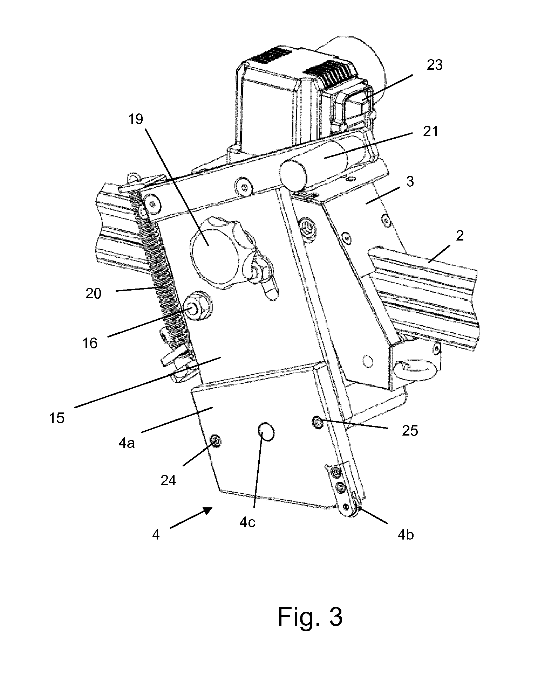

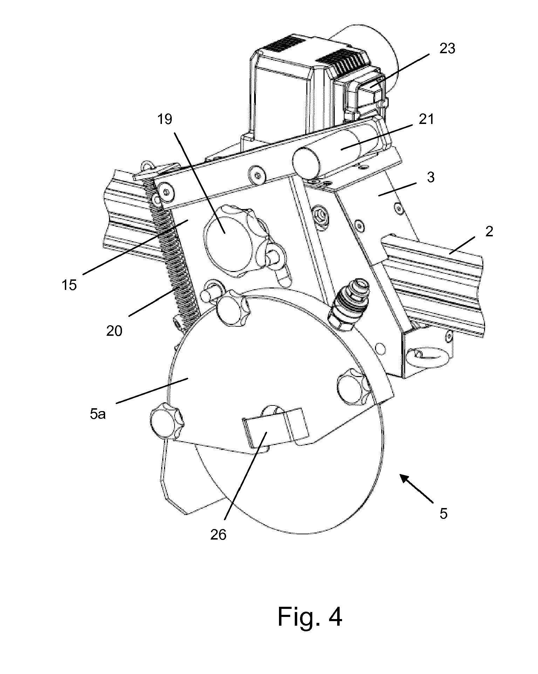

Der in Fig. 1 dargestellte Fliesenschneider besteht im Wesentlichen aus einer Auflagefläche 1 für eine zu schneidende Fliese, einer Führungsschiene 2, einem an der Führungsschiene geführten Laufwagen 3 und einem am Laufwagen gehalterten Schneidelement zum Ritzen und/oder Schneiden von Fliesen und/oder Platten, das wahlweise als Ritzwerkzeug 4 (Fig. 3) oder als Trennscheibe 5 (Fig. 4) ausgebildet ist.

Die Auflagefläche 1 wird im dargestellten Ausführungsbeispiel durch einen Edelstahlrost gebildet, der in einem Rahmen 6 gehaltert ist. Der Rahmen 6 kann darüber hinaus mit Hilfe von Standbeinen 7 in eine angenehme Arbeitshöhe gebracht werden. Etwaige am Rahmen 6 oder an den Standbeinen 7 vorgesehene Räder 8 ermöglichen ein problemloses Verschieben des Fliesenschneiders. Die zu bearbeitenden Fliesen und/oder Platten können mit Hilfe von Anschlagleiste 9, 10 auf der Auflagefläche 1 ausgerichtet werden.

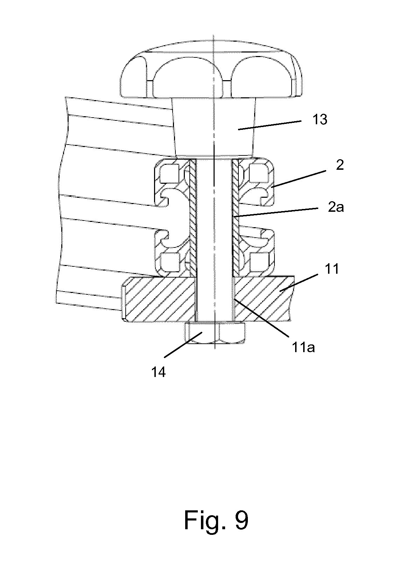

Die Führungsschiene 2 ist an beiden Enden an nach außen schwenkbaren Halterungen 11, 12 gehaltert. Die Befestigung ist in Fig. 9 näher dargestellt und erfolgt vorzugsweise an jedem Ende der Führungsschiene mittels einer Schraube 13, die durch eine Bohrung 2a der Führungsschiene und eine Bohrung 11 a der Halterung 11 gesteckt und mittels einer Mutter 14 gesichert wird. Die Befestigung am anderen Ende der Führungsschiene erfolgt in gleicher Art und Weise. Die nach außen schwenkbaren Halterungen 11, 12 ermöglichen in Verbindung mit der Trennscheibe einen stufenlosen Gehrungsschnitt von bis zu 45°.

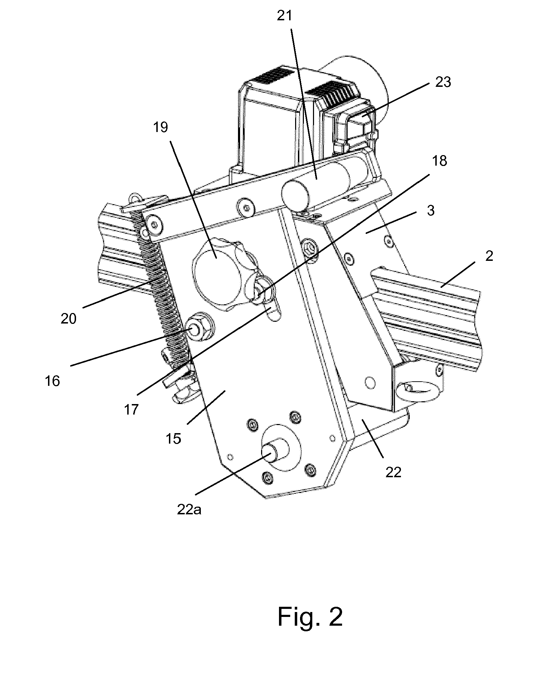

Am Laufwagen 3 ist eine Befestigungsplatte um eine Schwenkachse 16 schwenkbar gehaltert (siehe Fig. 2). Der Schwenkbereich wird durch eine bogenförmig, um die Schwenkachse 16 angeordnete Nut 17 definiert, wobei die Nutenden als Anschläge für den Schwenkbereich dienen. Hierzu ist ein fest mit dem Laufwagen verbundener Bolzen 18 vorgesehen, der in die Nut ragt und mit den Enden der Nut 17 in Kontakt kommt. Mit einem als Handrad ausgebildeten Feststellelement 19 kann die Befestigungsplatte in einer beliebigen Schwenkstellung arretiert werden. Ein an der Befestigungsplatte angreifendes Federelement 20 drückt bzw. zieht die Befestigungsplatte an einen der durch die Nutenden gebildeten Anschläge. Eine Drehung der Befestigungsplatte 15 um die Schwenkachse 16 erfolgt über einen Handgriff 21. An der Befestigungsplatte 15 ist darüber hinaus ein Motor 22 befestigt, dessen Abtriebswelle 22a durch die Befestigungsplatte 15 hindurchragt. Der Motor 22 ist über einen Betätigungsschalter 23 ein- bzw. ausschaltbar.

Die Befestigungsplatte 15 kann nun wahlweise mit dem Ritzwerkzeug 4 gemäß Fig. 3 oder einer Trennscheibe 5 gemäß Fig. 4 bestückt werden.

Das Ritzwerkzeug 4 gemäß Fig. 3 besteht aus einer Adapterplatte 4a mit einem daran befestigten Ritzrad 4b, wobei die Adapterplatte 4a über zwei Schrauben 24, 25 an der Befestigungsplatte 15 angeschraubt ist. Eine Aussparung 4c in der Adapterplatte 4a dient zur Aufnahme der Abtriebswelle 22a, die bei dieser Ausführungsform nicht zum Einsatz kommt.

Im Ausführungsbeispiel gemäß Fig. 4 ist anstelle des Ritzwerkzeuges 4 eine Trennscheibe 5 mit einer Haube 5a mit Hilfe eines Flansches 26 mit der Abtriebswelle 22a gekoppelt.

Die Besonderheit besteht darin, das Ritzwerkzeug 4 gemäß Fig. 3 und die Trennscheibe 5 gemäß Fig. 4 im montierten Zustand die gleiche Ritz- bzw. Schneidlinie haben. Eine zusätzliche Justage ist daher nicht erforderlich. Die Trennscheibe 5 wird über den Motor 22 nach Betätigung des Betätigungsschalter 23 angetrieben.

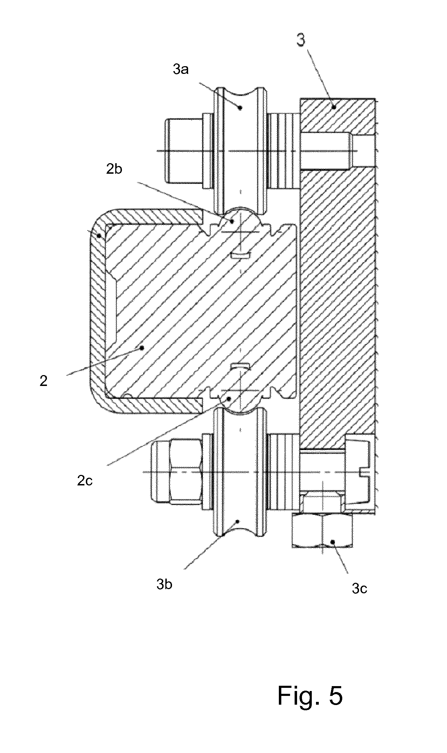

Im Folgenden wird anhand der Fig. 5 die Führung des Laufwagens 3 auf der Führungsschiene 2 näher erläutert. Die Führungsschiene 2 weist eine obere Führungsbahn 2b und eine untere Führungsbahn 2c auf, die im Querschnitt gerundet bzw. konvex ausgebildet sind. Der Laufwagen 3 ist mit oberen Führungsrollen 3a und unteren Führungsrollen 3b versehen, wobei zweckmäßigerweise jeweils zwei obere und zwei untere Führungsrollen vorgesehen sind. Die Laufflächen der Führungsrollen 3a, 3b sind entsprechend komplementär zu den Führungsbahnen, also konkav ausgebildet. Um den Verschleiß von Führungsbahn und Führungsrollen möglichst gering zu halten, sind diese zweckmäßigerweise aus gehärtetem Metall gefertigt.

Im dargestellten Ausführungsbeispiel sind die unteren Führungsrollen 3b in ihrem Abstand zu den oberen Führungsrollen 3a über eine Verstellschraube 3c einstellbar. Auf diese Weise lässt sich das Spiel, mit dem Laufwagen 3 auf der Führungsschiene 2 geführt ist, sehr feinfühlig einstellen. Durch die Abrollbewegung und ein optimal eingestelltes Spiel lässt sich der Laufwagen exakt geführt längs der Führungsschiene verschieben.

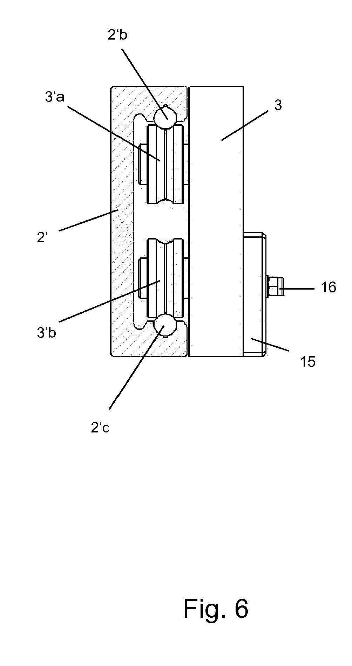

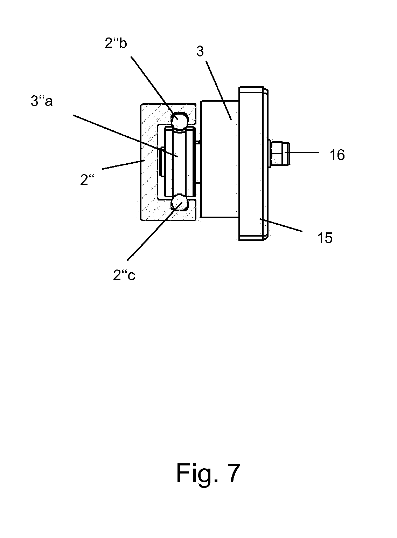

Fig. 6 zeigt ein zweites Ausführungsbeispiel für die Führung des Laufwagens an der Führungsschiene. Die Führungsschiene 2' ist hier U-förmig ausgebildet, wobei die obere und unter Führungsbahn 2'b, 2'c auf der Innenseite der beiden Schenkel angeordnet sind. Im Gegensatz zum ersten Ausführungsbeispiel befinden sich hier die Führungsrollen 3'a, 3'b zwischen den beiden Führungsschienen 2'b, 2'c. Fig. 7 zeigt schließlich noch eine Variante des zweiten Ausführungsbeispiel, bei dem die Führungsschiene 2" wiederum U-förmig ausgebildet ist und sich die Führungsschienen 2"b, 2"c wiederum an den Innenseiten der beiden Schenkel befinden. Der Laufwagen ist hier quer zur Führungsschiene nur mit einer Führungsrolle ausgebildet, die gleichzeitig in beide Führungsbahnen eingreift. In Längsrichtung der Führungsschiene sind im dargestellten Ausführungsbeispiel 3 Führungsrollen 3 hintereinander vorgesehen.

Im Rahmen der Erfindung sind selbstverständlich auch noch andere Ausführungsformen denkbar. Es ist jedoch von Vorteil, wenn die Führungsrollen und die zugehörigen Führungsbahnen derart ineinander greifen, dass die Führungsrollen auf der zugehörigen Führungsbahn zwangsgeführt sind. Wobei es zweckmäßig ist, wenn die Führungsrollen die zugehörige Führungsbahn teilweise umgreifen.

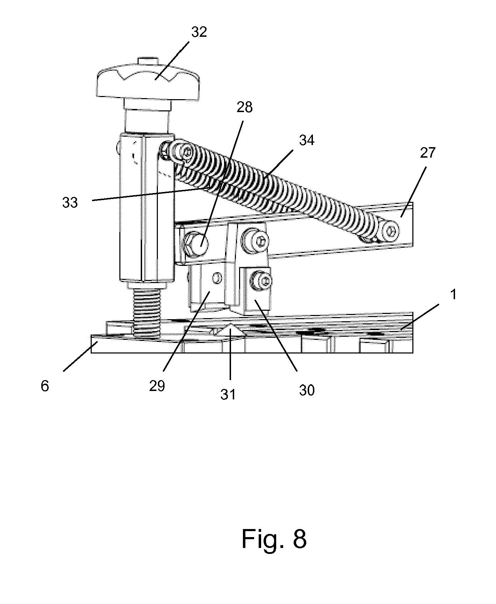

In Fig. 1 ist schließlich noch eine Brechstange 27 erkennbar, die zum Brechen der eingeritzten Fliese längs der Ritzlinie dient. Die Brechstange ist hierzu schwenkbeweglich um eine Schwenkachse 28 am Rahmen 6 gehaltert (siehe auch Fig. 8). Die Brechstange 27 weist in der Nähe in seiner Schwenkachse 28 zwei Brechbacken 29, 30 auf, die mit einem auf der Auflagefläche 1 angebrachten Brechkegel 31 zusammenwirken. Der Brechkegel 31 ist - in der Draufsicht des Fliesenschneiders - zwischen den beiden Brechbacken 29, 30 angeordnet. Die Höhe der Schwenkachse 28 über der Auflagefläche 1 lässt sich mit Hilfe eines Handrades 32 einstellen. Weiterhin wird die Brechstange 27 durch zwei Federelemente 33, 34 in einer von der Auflagefläche 1 abgehobenen Ruhestellung gehalten. Auf diese Weise kann die zu brechende Fliese unter der Brechstange ausgerichtet werden ohne dabei die Brechstange 27 nach oben halten zu müssen. Der Brechvorgang erfolgt durch Schwenken der Brechstange 27 um die Schwenkachse 28 in seiner Brechstellung, wobei die beiden Brechbacken 29, 30 zu beiden Seiten der Ritzlinie auf die Fliese einwirken und dabei die Fliese auf den Brechkegel 31 drücken, dabei kommt es zum üblichen Bruch der Fliese längs der Ritzlinie.

## Patentansprüche

1. Fliesenschneider mit
a. einer Auflagefläche (1) für zu schneidende Fliesen,
b. einer Führungsschiene (2),
c. einem an der Führungsschiene (2) geführten Laufwagen (3),
d. einer am Laufwagen (3) angebrachten Befestigungsplatte (15),
e. einem an der Befestigungsplatte (15) gehalterten Motor (22) mit Abtriebswelle (22a),
f. einem Ritzwerkzeug (4),
g. einer Trennscheibe (5),
h. wobei wahlweise das Ritzwerkzeug (4) mit der Befestigungsplatte (15) oder die Trennscheibe (5) mit der Abtriebswelle (22a) derart koppelbar sind, dass
i. Ritzwerkzeug (4) und Trennscheibe (5) die gleiche Ritz- bzw. Schneidlinie haben und
j. das Ritzwerkzeug (4) und die Trennscheibe (5) in der Draufsicht des Fliesenschneiders seitlich von der Führungsschiene (2) angeordnet sind.

2. Fliesenschneider nach Anspruch 1, **dadurch gekennzeichnet, dass** die Befestigungsplatte (15) in einem bestimmten Schwenkbereich um eine Schwenkachse (16) schwenkbar am Laufwagen (3) gehaltert ist.

3. Fliesenschneider nach Anspruch 2, **dadurch gekennzeichnet, dass** die Schwenkachse (16) senkrecht zur Führungsschiene (2) ausgerichtet ist.

4. Fliesenschneider nach ein oder mehreren der Ansprüche 2 bis 3, **dadurch gekennzeichnet, dass** der Schwenkbereich durch zwei Anschläge definiert wird und ein Federelement (20) die Befestigungsplatte (15) an einen dieser Anschläge drückt.

5. Fliesenschneider nach Anspruch 4, **dadurch gekennzeichnet, dass** die Befestigungsplatte (15) eine bogenförmige Nut (17) um seine Schwenkachse (16) aufweist und die beiden Nutenden die Anschläge für den Schwenkbereich darstellen.

6. Fliesenschneider nach ein oder mehreren der Ansprüche 2 bis 5, **dadurch gekennzeichnet, dass** ein Feststellelement (19) vorgesehen ist, mit dem die Befestigungsplatte (15) in einer beliebigen Schwenkstellung arretiert werden kann.

7. Fliesenschneider nach einem oder mehreren der vorhergehenden Ansprüche, **dadurch gekennzeichnet, dass** eine um eine Schwenkachse (28) schwenkbewegliche Brechstange (27) vorgesehen ist, die mit einem auf der Auflagefläche (1) angeordneten Brechkegel (31) zusammenwirkt.

8. Fliesenschneider nach Anspruch 7, **dadurch gekennzeichnet, dass** die Schwenkachse (28) der Brechstange (27) parallel zur Auflagefläche (1) ausgerichtet ist.

9. Fliesenschneider nach Anspruch 7 oder 8, **dadurch gekennzeichnet, dass** die Brechstange (27) in der Nähe seiner Schwenkachse (28) zwei Brechbacken (29, 30) aufweist, die derart angeordnet sind, dass der Brechkegel (31) - in der Draufsicht des Fliesenschneiders - zwischen den beiden Brechbacken (29, 30) liegt.

10. Fliesenschneider nach einem oder mehreren der vorhergehenden Ansprüche 7 bis 9, **dadurch gekennzeichnet, dass** die Brechstange (27) mit wenigstens einem Federelement (33, 34), vorzugsweise zwei Federelementen zusammenwirkt und zwischen einer Ruhe- und einer Brechstellung hin und her beweglich ist, wobei die Brechstange (27) durch das wenigstens eine Federelement (33, 34) in ihrer Ruhestellung gehalten wird und gegen den Druck des Federelements (33, 34) in Richtung der Auflagefläche (1) in ihre Brechstellung gedrückt werden kann.

11. Fliesenschneider nach einem oder mehreren der vorhergehenden Ansprüche, **dadurch gekennzeichnet, dass** die Führungsschiene (2, 2', 2") eine erste und eine zweite Führungsbahn (2a, 2b) und der Laufwagen mehrere Führungsrollen (3a, 3b) aufweist, wobei die Führungsrollen mit den Führungsbahnen in Abrolleingriff stehen und die Führungsrollen und die zugehörige Führungsbahn derart ineinander greifen, dass die Führungsrollen auf der zugehörigen Führungsbahn zwangsgeführt sind.

12. Fliesenschneider nach Anspruch 10, **dadurch gekennzeichnet, dass** die Führungsrollen (3a, 3b) die zugehörige Führungsbahn (2a, 2b) teilweise umgreifen.

13. Fliesenschneider nach einem oder mehreren der vorhergehenden Ansprüche, **dadurch gekennzeichnet, dass** weiterhin ein Fräswerkzeug vorgesehen ist, das mit der Abtriebswelle (22a) koppelbar ist.

## Claims

1. Tile cutter with
a. a flat surface (1) for tiles that are to be cut,
b. a guide rail (2),
c. a roller unit (3) guided on the guide rail (2),
d. a fastening plate (15) attached to the roller unit (3),
e. a motor (22) held by a bracket to the fastening plate (15) with a driveshaft (22a)
f. a scoring tool (4)
g. a separating disk (5)
h. whereby the scoring tool (4) may be selected to be coupled with the fastening plate (15) or with the separating disk (5) with the driveshaft, in a way that
i. the scoring tool (4) and the separating disk (5) have the same scoring or cutting line, and
j. in the aerial view of the tile cutter the scoring tool (4) and the separating disk (5) are set up on the side of the guide rail (2).

2. Tile cutter according to claim 1, **characterized in that** the fastening plate (15) is attached in a defined rotation range and may be rotated around a rotation axis (16) on the roller unit (3).

3. Tile cutter according to claim 2, **characterized in that** the rotation axis (16) is set up perpendicular to the guide rail (2).

4. Tile cutter according to one or more of claims 2 to 3, **characterized in that** the rotation axis is defined by two stop units, and a spring element (20) pushes the fastening plate (15) up to one of these stop units.

5. Tile cutter according to claim 4, **characterized in that** the fastening plate (15) has an arched groove (17) around its rotation axis (16), and the two groove ends form the stop units for the rotation range.

6. Tile cutter according to one or more of claims 2 to 5, **characterized in that** a locking element (19) is provided with which the fastening plate (15) can be kept in place at any desired rotation position.

7. Tile cutter according to one or more of the above claims, **characterized in that** a rotatable pinch bar (27) is provided around a rotation axis (28), which works together with a crusher head (31) set up on the flat surface (1).

8. Tile cutter according to claim 7, **characterized in that** the rotation axis (28) of the pinch bar (27) is set up parallel to the flat surface (1).

9. Tile cutter according to claim 7 or 8, **characterized in that** the pinch bar (27) near its rotation axis (28) has two breaking teeth (29, 30) that are set up in a way that the crusher head (31) - in the aerial view of the tile cutter - lies between the two breaking teeth (29, 30).

10. Tile cutter according to one or more of the above claims 7 to 9, **characterized in that** the pinch bar (27) works together with at least one spring element (33, 34) and preferentially with two spring elements, and is movable back and forth between a resting position and a breaking position, whereby the pinch bar (27) is held in its resting position by at least one spring element (33, 34), and in its breaking position can be pressed in the direction of the flat surface (1) against the pressure of the spring element (33, 34).

11. Tile cutter according to one or more of the above claims, so **characterized in that** the guide rail (2, 2', 2") has a first and a second guide path (2a, 2b) and the carriage unit has several guide rolls (3a, 3b), whereby the guide rolls stand in an unrolling holder with the guide paths, and the related guide rolls grasp each other in such a way that the guide rolls are necessarily forced onto the relevant guide path.

12. Tile cutter according to claim 10, so **characterized in that** the guide rolls (3a, 3b) partially clasp the relevant guide path (2a, 2b).

13. Tile cutter according to one or more of the prior claims, so **characterized in that** a milling tool is also planned that can be coupled with the driveshaft (22a).

## Revendications

1. Dispositif de coupe de carreaux comprenant :
a. une surface de support (1) pour les carreaux à couper
b. un rail de guidage (2),
c. un chariot (3) conduit sur le rail (2),
d. une plaque de fixation (15), agencée sur le chariot (3),
e. un moteur (22) maintenu, avec un arbre de sortie (22a), sur la plaque de fixation (15),
f. un outil de rainurage (4),
g) un disque de séparation (5),
h) sachant que l'on peut, au choix, coupler l'outil de rainurage (4) avec la plaque de fixation (15) ou le disque de séparation (5) avec l'arbre de sortie (22a) de telle manière
i. que l'outil de rainurage (4) et le disque de séparation (5) présentent la même ligne de rainurage respectivement de coupe, et
j. que l'outil de rainurage (4) et le disque de séparation (5), le dispositif de coupe de carreaux étant vu d'en haut, soit disposés latéralement par rapport au rail de guidage (2).

2. Dispositif de coupe de carreaux selon la revendication 1,
**caractérisé en ce que** plaque de fixation (15) soit maintenue à pivotement sur le chariot (3), dans une plage de pivotement définie, autour d'un axe de pivotement (16).

3. Dispositif de coupe de carreaux selon la revendication 2,
**caractérisé en ce que** l'axe de pivotement (16) est orienté perpendiculairement au rail de guidage (2),

4. Dispositif de coupe de carreaux selon l'une ou plusieurs des revendications 2 à 3,
**caractérisé en ce que** la plage de pivotement est définie par deux butées et qu'un élément élastique (20) presse la plaque de fixation (15) contre l'une de ces butées.

5. Dispositif de coupe de carreaux selon la revendication 4,
**caractérisé en ce que** la plaque de fixation (15) est dotée, autour de son axe de pivotement (16), d'une rainure (17) en forme d'arc et que les deux extrémités de la rainure forme les butées qui définissent la plage de pivotement.

6. Dispositif de coupe de carreaux selon l'une ou plusieurs des revendications 2 à 5,
**caractérisé en ce qu'**est prévu un élément de blocage (19), au moyen duquel la plaque de fixation (15) peut être bloquée dans n'importe quelle position de pivotement souhaitée.

7. Dispositif de coupe de carreaux selon l'une ou plusieurs des revendications précédentes,
**caractérisé en ce qu'**est prévue une barre de broyage (27), qui, pouvant pivoter autour d'un axe de pivotement (28), coopère avec un cône de broyage (31), qui est disposé sur la surface de support (1).

8. Dispositif de coupe de carreaux selon la revendication 7,
**caractérisé en ce que** l'axe de pivotement (28) de la barre de broyage (27) est orienté parallèlement à la surface de support (1).

9. Dispositif de coupe de carreaux selon revendication 7 ou 8,
**caractérisé en ce que** la barre de broyage (27) est dotée, à proximité de son axe de pivotement (28), de deux mâchoires de broyage (29, 30), qui sont disposées de telles manière que le cône de broyage (31) - le dispositif de coupe de carreaux étant vu d'en haut - est situé entre les deux mâchoires de broyage (29, 30).

10. Dispositif de coupe de carreaux selon l'une ou plusieurs des revendications précédentes 7 à 9,
**caractérisé en ce que** la barre de broyage (27) coopère avec au moins un élément élastique (33, 34), de préférence avec deux éléments élastiques, et est mobile, en va et vient, entre position de repos et une position de broyage, sachant que la barre de broyage (27) est maintenue dans sa position de repos par l'élément élastique (33, 34) au moins prévu et est pressée en direction de la surface de support (1), dans sa position de broyage, en surmontant la pression de l'élément élastique (33, 34).

11. Dispositif de coupe de carreaux selon l'une ou plusieurs des revendications précédentes,
**caractérisé en ce que** le rail de guidage (2, 2', 2") est doté d'une première voie et d'une deuxième voie de guidage (2a, 2b) et le chariot est doté de plusieurs rouleaux de guidage (3a, 3b), sachant que les rouleaux de guidage sont en prise de roulement avec les voies de guidage et que les rouleaux de guidage et la voie de guidage associée s'engagent les uns dans l'autre de telle manière que les rouleaux de guidage sont conduits en guidage forcé sur la voie de guidage associée.

12. Dispositif de coupe de carreaux selon la revendication 10,
**caractérisé en ce que** les rouleaux de guidage (3a, 3b) enserrent partiellement la voie de guidage (2a, 2b) associée.

13. Dispositif de coupe de carreaux selon l'une ou plusieurs des revendications précédentes,
**caractérisé en ce que,** de plus, est prévu un outil de fraisage qui peut être couplé avec l'arbre de sortie (22a).
